## Europäisches Patentamt

## European Patent Office

## Office européen des brevets

(19)

(11) Veröffentlichungsnummer: **0 221 481**
**B1**

(12)

# EUROPÄISCHE PATENTSCHRIFT

(45) Veröffentlichungstag der Patentschrift:
**05.07.89**

(51) Int. Cl.⁴: **F16L 9/12**, F16L 11/00,
H02G 1/08

(21) Anmeldenummer: **86114847.6**

(22) Anmeldetag: **25.10.86**

(54) **Kunststoffrohr zur Aufnahme von Einzügen sowie Verfahren und Vorrichtung zu seiner Herstellung.**

(30) Priorität: **06.11.85 DE 3539304**

(43) Veröffentlichungstag der Anmeldung:
**13.05.87 Patentblatt 87/20**

(45) Bekanntmachung des Hinweises auf die Patenterteilung:
**05.07.89 Patentblatt 89/27**

(84) Benannte Vertragsstaaten:
**AT BE CH DE ES FR GB GR IT LI LU NL SE**

(56) Entgegenhaltungen:
**DE-A- 2 903 597**
**DE-B- 1 959 738**
**US-A- 1 659 075**
**US-A- 1 716 384**
**US-A- 3 526 086**

(73) Patentinhaber: **WAVIN B.V., Händellaan 251, NL-8031 EM Zwolle(NL)**

(72) Erfinder: **Guettouche, Ali, Johannesstrasse 7, D-4472 Haren(DE)**
Erfinder: **Graafmann, Jürgen, Buchsbaumweg 10, D-4450 Lingen(DE)**

(74) Vertreter: **Busse & Busse Patentanwälte, Postfach 1226, D-4500 Osnabrück(DE)**

ACTORUM AG

## Beschreibung

Die Erfindung betrifft ein Kunststoffrohr zur Aufnahme von Einzügen nach dem Oberbegriff des Anspruchs 1 und bezieht sich ferner auf ein Verfahren und eine Vorrichtung zum Herstellen eines derartigen Rohres.

Häufig werden Rohre zum Schutz und zur Bündelung von dünneren Rohren, Kabeln, Schläuchen u. dgl. verlegt, wobei letztere nach dem Verlegen einzuziehen sind. Das Einziehen kann auch später notwendig werden, wenn etwa noch bisher verbliebener freier Raum im Kunststoffrohr zu nutzen ist oder wenn ein Kabel oder Innenrohr ausgetauscht werden muß.

Die Länge der dazu ansetzbaren verlegten Rohrabschnitte zwischen zwei Zugangsstellen, wie etwa Kabelschächten, die möglichst groß gewählt wird, um große Einzuglängen in einem Stück zu erhalten und große Verlegeschritte zu erzielen, ist vor allem durch die Reibung des Einzugs begrenzt. Um diese Reibung zu mindern, ist es bereits gebräuchlich, am Einzugspunkt in den Rohrquerschnitt und auf das einzuziehende Element Gleitmittel zu geben, welches sich dann mit dem Einziehen verteilt.

Verständlicherweise nimmt die Wirkung des Gleitmittels ab, je weiter sich das einzuziehende Element von der Einzugstelle entfernt. Überdies können bereits geringfügige Verlagerungen eines im Kunststoffrohr liegenden Kabel- oder Leitungsbündels die Reibwerte sehr stark verändern, wenn etwa eine gleitmittelfreie Anlage zwischen Rohr und Einzug auftritt, und überdies führt die ungleichmäßige Verteilung von Gleitmittel zu einem ineffektiven Einsatz. Letzteres gilt insbesondere auch für den Fall, daß immer erneut mit maximalem Gleitmitteleinsatz gearbeitet wird, obschon möglicherweise in der Nähe der Einzugsstelle Gleitmittel im Überschuß vorhanden ist und die weitere Zugabe keine Verbesserung mehr bewirkt. Weiterhin kann sich die Gleitmittelverteilung im Zuge der Bearbeitung und insbesondere bei zeitlichen Abständen zwischen aufeinanderfolgenden Bearbeitungen ungleichmäßig absetzen, wobei die tieferliegenden Bereiche des Rohrquerschnitts ein Übermaß an Gleitmittel erhalten, während der obere, hauptsächlich zur Aufnahme weiterer Einzüge bereitstehende Querschnittsbereich unzulänglich versorgt ist. Das Absinken von Gleitmittel innerhalb des Rohres führt auch allgemein dazu, daß in Längsrichtung des Rohres höherliegende Bereiche unterversorgt und tieferliegende Bereiche überversorgt sind. Besonders ungünstig ist diese Arbeitsweise in Bezug auf die langzeitige Ausstattung des Rohres, bei der ungleichmäßige und überalterte Gleitmittelablagerungen das Einziehen zusätzlich erschweren können.

Das Dokument DE-A 2 903 597 zeigt ein Kunststoffrohr mit einer in allseitigen Verteilung von einem Gleitmittel benützten Innenwandung gemäß dem Oberbegriff des Anspruchs 1.

Aufgabe der Erfindung ist es dementsprechend, ein Kunststoffrohr zur Aufnahme von Einzügen so auszugestalten, daß das Einziehen vor Ort generell vereinfacht und erleichtert wird, und zwar auch dann, wenn es sich nicht um eine Erstausstattung des Rohres mit Einzügen, sondern um ein nachträgliches Einziehen handelt, wobei ferner ein sparsamer und effektiver Einsatz von Gleitmittel möglich wird.

Gemäß der Erfindung wird diese Aufgabe von einem Kunststoffrohr nach dem Oberbegriff des Anspruchs 1 ausgehend durch die kennzeichnenden Merkmale des Anspruchs 1 gelöst.

Die Erfindung bezieht sich auch auf ein Herstellungsverfahren des Rohres gemäss Anspruch 14 und auf eine Vorrichtung zur Durchführung des Verfahrens gemäß Anspruch 15.

Die erfindungsgemäße Lösung eröffnet die Möglichkeit, ein Kunststoffrohr mit einer Dauerschmierung auszustatten, die fabrikmäßig eingebracht werden kann und im Rohr zumindest für die normale Lebensdauer und die normale "Fluktuation" an Einzügen vorhält. Dies schafft eine perfekte Verteilung von Gleitmittel über die gesamte Rohrwandung und vermeidet es, daß ein Einzug zunächst unter der Wirkung von Gleitmitteln (und geringer Berührungslänge) anfänglich leicht in das Rohr gleitet um dann mit ansteigenden Reibungskräften vielleicht kurz vor dem erfolgreichen Abschluß des Einziehens stecken zu bleiben. Die Montage vor Ort hat sich also um die Schmierung des Rohres nicht mehr zu sorgen und allenfalls noch Gleitmittel auf den Einzug zu bringen, wobei dieses allerdings auch zu einem Teil (und einem Umfangsbereich) von der Wandung des Rohres abgegeben werden kann.

Die Bereitstellung und Bevorratung von Gleitmittel auf der Rohrinnenwandung wird durch die Profilierung ermöglicht, welche verhindert, daß das Gleitmittel von einer flachen Rohrinnenwandung schon durch den ersten Kontakt mit dem Einzug abgewischt wird, und statt dessen in den tieferliegenden Bereichen Gleitmittelreserven bereitstellt.

Die Profilierung ist gleichzeitig mit einer Verminderung der Oberfläche geeignet, die reibende Oberfläche und damit die Reibkräfte herabzusetzen.

Die Form der Profilierung kann unterschiedlich gewählt werden, beispielsweise in Form von Rippen bzw. Rillen, wobei Längsrippen herstellungstechnisch besonders einfach sind, aber auch zuerst der Gefahr eines "Auswischens" und damit einer Gleitmittelerschöpfung unterliegen, während Querrippen dieser Gefahr weniger ausgesetzt sind, allerdings auch schwerer herzustellen sind. Ähnlich bieten waffelartige oder napfförmige Ausnehmungen in der Innenwandung des Rohrs guten Schutz für die Einlagerung des Gleitmittels, während umgekehrt noppenförmige Erhebungen auf der Innenwandung des Rohrs viel an tiefliegenden Oberflächen und damit auch viel Volumen für die Einlagerung von Gleitmittel bereitstellen.

Bei der Profilierung wird vorzugsweise eine Profilhöhe von unter 1 mm, regelmäßig sogar nur von wenigen Zehntelmillimetern, vorgesehen, um die gesamte Gleitmittelmenge zum Einsatz zu bringen. Die positiven und negativen Profilanteile sind dabei nicht nur anhand der Volumenaufnahme zu bestimmen, sondern auch der dem Kunststoff dazu bietenden Profilierungsoberfläche, die eine geringe Reibung bieten soll, aber auch nicht "fressen" darf, nicht also bei Einzug angegriffen werden darf, was die Reibbeiwerte erhöhen könnte.

Weitere Merkmale und Vorteile der Erfindung ergeben sich aus den Ansprüchen und der nachstehenden Beschreibung in Verbindung mit der Zeichnung, in der mehrere Ausführungsbeispiele von Kunststoffrohren und Treiborganen zum Einbringen von Gleitmittel in diese veranschaulicht sind. ES zeigen:

Fig. 1 eine Stirnansicht eines Kunststoffohres,

Fig. 2, 3 u. 4 Längsschnitte durch stirnseitige Wandteile weiterer Kunststoffrohre und

Fig. 5 u. 6 perspektivische Darstellungen je einer Ausführungsform eines Treiborgans zum Auftragen von Gleitmittel auf die Innenwandung eines in einem Axialschnitt gezeigten Kunststoffrohres.

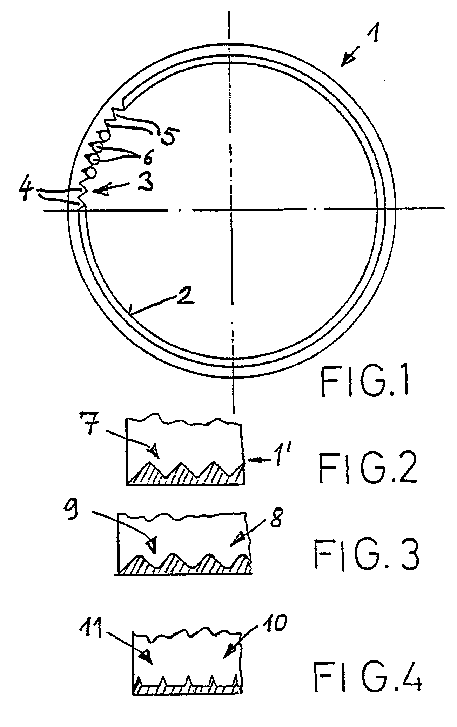

In Fig. 1 ist ein insgesamt mit 1 bezeichnetes Kunststoffrohr, beispielsweise ein Kabelschutzrohr, dargestellt, welches regelmäßig einen durch Norm vorgeschriebenen Außendurchmesser aufweist und im Boden verlegt werden kann, wobei die Rohre über Muffenteile aneinandersetzbar sind. Häufig enthalten diese Rohre bereits Zugseile, die das Einbringen von Einzügen, d.h. hier von Kabeln, ermöglichen.

Das Kabelschutzrohr 1 besitzt eine Innenwandung 2 mit einer Profilierung, die aus Darstellungsgründen nur über einen Teil des Umfangs eingezeichnet ist und die aus Längsrippen 4 mit dazwischenliegenden Rillen 5 besteht, in die Gleitmittel 6 (kugelförmig dargestellt) eingelagert ist.

Das Gleitmittel hat gleitende und haftende Bestandteile, die es in Verbindung mit der Profilierung des Rohres verhindern, daß es längs der Innenwandung herunterläuft, die aber auch den Übergang auf den Umfang eines Einzugs, etwa eines Kabels erleichtern. Ein solches Gleitmittel läßt sich beispielsweise auf der Grundlage von Weißöl oder Silikonöl mit eingelagerten Mikrokugeln (microbells) aus Schaumglas herstellen. Die Mischung aus einem Silikonöl und aus einem pulverigen Gleitmittel, z.B. PE oder PP, oder Mikrokugeln hat sich als besonders vorteilhaft herausgestellt, wenngleich auch insgesamt flüssige oder insgesamt pulverige Zusammensetzungen verwendbar sind. Wichtig ist auch, daß das Gleitmittel nicht wasserlöslich, jedenfalls nicht hygroskopisch ist, um eine Außenlagerung der Kabelschutzrohre unproblematisch zu ermöglichen, und daß das Gleitmittel nicht austrocknet oder verharzt, damit auch langjährig nach dem Verlegen eines solchen Rohres noch der Austausch oder die Ergänzung von Einzügen möglich ist.

Aus Darstellungsgründen ist die Profilierung 3 des Rohres 1 vergrößert dargestellt.

Das gleiche gilt für ein Rohr 1' nach Fig. 2, welches gleichfalls eine dachförmige Profilierung 7 mit Übereinstimmendem Positiv/Negativ-Profil besitzt, wobei allerdings die Profilierung quer zur Rohrachse verläuft. Derartige Querrippen sind fertigungstechnisch schwieriger als Längsrippen, bieten allerdings einen guten Einlagerungsschutz für Gleitmittel.

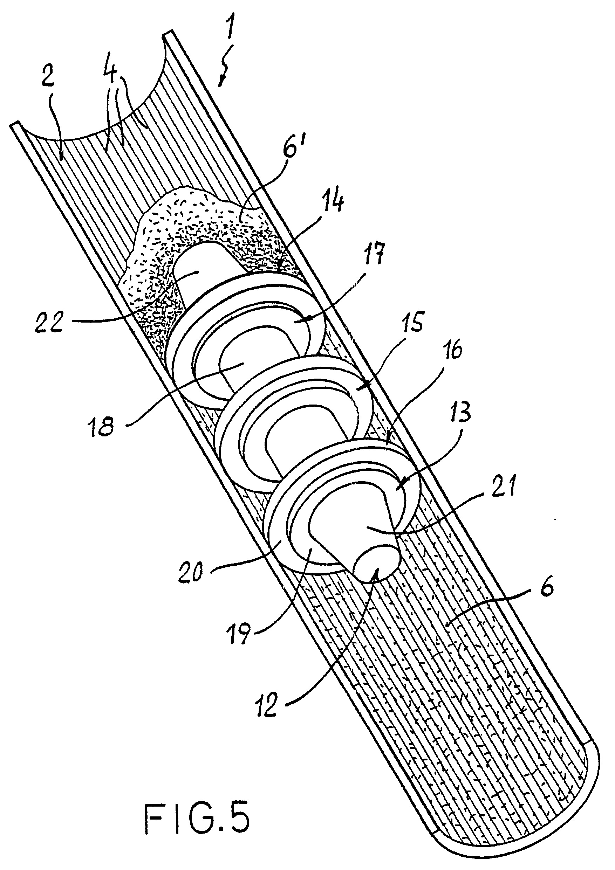

Ein weiteres Rohr 8 nach Fig. 3, welches ebenfalls mit einem Teil-Längsschnitt seiner Wand nahe der Stirnseite dargestellt ist, besitzt eine Querprofilierung 9, die sich von der Profilierung des Rohres 1' nach Fig. 2 dadurch unterscheidet, daß die Querrillen der Profilierung am Fuß ausgerundet sind, um eine Kerbwirkung zu vermeiden, und am Rippenscheitel gleichfalls abgerundet sind, um unempfindliche Anlagebereiche für die Einzüge zu erhalten und mit den Abrundungen auch ein Anhaken gegen Stirnkanten der Einzüge zu vermeiden.

In Fig. 4 ist eine weitere Abwandlung mit einem Rohr 10 dargestellt, das gleichfalls eine Querprofilierung 11 aufweist, bei der die Dreiecksrippen relativ schmal sind und bei der das Negativprofil sehr viel größer als das Positivprofil ist. Damit lassen sich bei vorgegebener Profilhöhe größere Mengen an Gleitmittel einlagern.

Es versteht sich, daß hier eine Vielzahl von Profilierungen denkbar und möglich ist, wobei insbesondere auch herstellungstechnische Gesichtspunkte für die Profilwahl ausschlaggebend sein können. Daneben ist von Bedeutung, wieviel Taschenraum für die Aufnahme von Gleitmittel bereitzustellen ist und auch, wie durch die Form und Größe des Negativprofils eine dauernde Lagesicherung des Gleitmittels, ein Schutz des Gleitmittels gegen vorzeitiges Herauswischen, aber auch eine ausreichende Abgabe des Gleitmittels beim Einziehen gewährleistet werden kann. Hierbei ist nicht zuletzt die Zähigkeit des Gleit mittels und - bei einem bevorzugten Gleitmittel aus flüssigen und festen Bestandteilen - die Korngröße dieser Bestandteile von Bedeutung. So können Mikrokugeln vorteilhaft so groß gewählt werden, daß sie bei Einlagerung in die Profilierungsrillen nach oben bzw. innen vorstehen und damit eine tragende Rollschicht bilden.

Das erfindungsgemäße Kunststoffrohr kann, ausgehend von einer geeigneten Kunststoffzusammensetzung, z.B. auf der Basis von Polyäthylen oder sonstiger geeigneter Polyolefine, nach an sich bekannten Extrusionsverfahren nahtlos hergestellt werden. Die Profilierung der Innenwandung 2 des Kunststoffrohrs kann dabei in den Extrusionsvorgang einbezogen werden oder im Anschluß an diesen erfolgen. So kann beispielsweise die Profilierung 3 in Form vorwiegend in Längsrichtung des Rohrs 1 verlaufender Rippen 4 durch entsprechende Profilierung des Mundstücks des Extruders herbeigeführt werden. Andere Profilierungen, wie in Umfangsrichtung verlaufende Rippen oder Noppen, werden mit Hilfe geeigneter Formwerkzeuge hergestellt.

Das insoweit vorbereitete Kunststoffrohr wird üblicherweise zur Lagerung auf Vorratsrollen aufgewickelt. In diesem Zustand kann das Gleitmittel 6 auf die Innenwandung 2 des Kunststoffrohrs aufgetragen werden. Es ist jedoch genauso gut möglich, das Gleitmittel auf die Innenwandung im verlegten Zustand des Kunststoffrohrs aufzubringen, wobei das Rohr, beispielsweise mit einer Aufschnittslänge von 500 bis 600 m , im wesentlichen in horizontaler Richtung im Erdreich bzw. einem Kabelkanal verläuft.

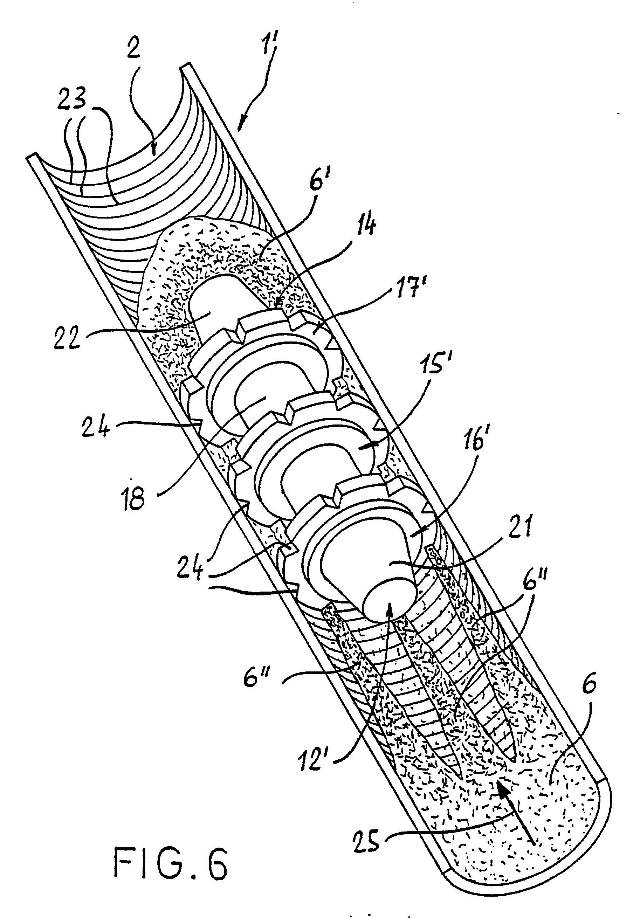

Zum Auftragen des Gleitmittels 6 auf die Innenwandung 2 des Kunststoffrohrs wird ein Gleitmittelvorrat im Überfluß in eines der beiden Enden des Kunststoffrohrs eingefüllt, woraufhin der Gleitmittelvorrat als Pfropfen 6' (Fig. 5 und 6) durch Druckluftbeaufschlagung über ein im wesentlichen durchmessergleiches Treiborgan 12 bzw. 12' durch das Kunststoffrohr hindurchgetrieben wird. Dabei gibt der während seines Vortriebs den Innendurchmesser des Kunststoffrohrs ausfüllende Gleitmittelpfropfen 6' ständig Gleitmittel durch Anhaftung an der Innenwandung 2 ab, so daß diese fortschreitend rundum mit dem Gleitmittel 6 benetzt wird.

In Fig. 5 ist ein Teilstück des Kunststoffrohrs 1 mit Längsrippen 4 auf seiner Innenwandung 2 dargestellt. Ferner ist das Treiborgan 12 während seines Vortriebs durch das Kunststoffrohr 1 gezeigt. Das Treiborgan 12 besitzt eine von Druckluft beaufschlagbare Kolbenfläche 13 und eine dieser gegenüberliegende Gleitmittel-Vortriebsfläche 14, die den Gleitmittelpfropfen 6' vor sich her schiebt. Der Außendurchmesser der Kolbenfläche 13 und der Vortriebsfläche 14 entsprechen dem Innendurchmesser des Rohrs 1 für einen Gleiteingriff mit dessen Innenwandung 2.

Wie ersichtlich ist, sind die Kolbenfläche 13 und die Vortriebsfläche 14 des Treiborgans 12 mit axialem Abstand voneinander angeordnet, und zwischen diesen ist, wiederum unter Einhaltung eines jeweiligen axialen Abstands, eine durchmessergleiche Verteilscheibe 15 angeordnet. Die Kolbenfläche 13, die Vortriebsfläche 14 und die Verteilscheibe 15 sind in ihrem mit der Innenwandung 2 des Rohrs 1 in Eingriff stehenden Umfangsbereich jeweils von einem verschleißfesten, elastischen Werkstoff, z.B. Silikonkautschuk, gebildet.

In einer zweckmäßigen Ausgestaltung können Ringscheiben 16 und 17 vorgesehen sein, die, wie die in gleicher Weise ausgebildete Verteilscheibe 15, auf einem zentralen Tragdorn 18 des Treiborgans 12 unter Einhaltung eines gegenseitigen axialen Abstands festgelegt sind. Die Ringscheiben 15,16 und 17 können jeweils einen Befestigungsring zur Festlegung auf dem Tragdorn 18 und einen Umfangsring 20 umfassen, der, wie oben erwähnt, aus einem verschleißfesten, elastischen Werkstoff besteht.

Die Ringscheiben 16 und 17 bilden einen Teil der Kolbenfläche 13 bzw. der Vortriebsfläche 14, zu denen sich jeweils die stirnseitig wirksame Fläche des Tragdorns 18 hinzu addiert.

Entsprechend der zeichnerischen Darstellung besitzt das Treiborgan 12 eine symmetrische Ausbildung beidseits seiner mittleren Querebene. Dies bedeutet, daß das Treiborgan 12 auch umgekehrt in das Kunststoffrohr eingesetzt werden kann, so daß die Ringscheibe 17 die Kolbenfläche 13 und die Ringscheibe 16 die Gleitmittel-Vortriebsfläche 14 bildet. Die beiden stirnseitigen Enden des Tragdorns 18 sind von identischen, kegelstumpfförmigen Zapfen 21 und 22 gebildet. Die kegelstumpfförmigen Zapfen 21 begünstigen die Kurvengängigkeit des Treiborgans 12, wenn dieses durch die Windungen eines auf einen Vorratswickel gewickelten Kunststoffrohrs getrieben wird. Dabei wird die Kolbenfläche 13 mit Drücken von etwa 2 bis 10 bar beaufschlagt. Selbstverständlich ist auch die axiale Länge des Treiborgans 12 so bemessen, daß die erforderliche Kurvengängigkeit nicht beeinträchtigt ist. Insofern ist auch der Anzahl von Verteilscheiben 15, von denen in Fig. 5 nur eine gezeigt ist, zwischen den endseitigen Ringscheiben 16 und 17 eine Grenze gesetzt.

Die Fig. 5 zeigt in dem Bereich des Kunststoffrohrs 1, durch den sich das Treiborgan 12 bereits hindurchbewegt hat, eine allseitige, gleichmäßige Rundumverteilung des Gleitmittels 6 auf der Innenwandung 2 vorwiegend in den von den Längsrippen 4 definierten Längsrillen. Vorauslaufend ist der Gleitmittelpfropfen 6' gezeigt, der nach seinem Durchgang durch das Rohr endseitig ausgestoßen wird.

Die Fig. 6 zeigt eine Abwandlung des Treiborgans 12', das dann Anwendung findet, wenn die Innenwandung des Kunststoffrohrs mit anderen Profilierungen als Längsrippen 4 versehen ist. So ist in Verbindung mit dem Treiborgan 12' in Fig. 6 ein Kunststoffrohr 1' mit Querrippen 23 als Profilierung der Innenwandung 2 dargestellt. Hierbei sind die Ringscheiben 15',16' und 17' an ihrem Außenumfang jeweils mit in Umfangsrichtung mit Abstand voneinander angeordneten, keilförmigen Ausnehmungen 24 versehen. Die Ausnehmungen 24 der einzelnen Ringscheiben 15',16',17' fluchten miteinander in axialer Richtung.

Wird das Treiborgan 12', analog dem Treiborgan 12 gemäß Fig. 5, in Richtung des Pfeils 25 durch das Kunststoffrohr 1' hindurchgetrieben, so bleiben zunächst hauptsächlich Gleitmittelstreifen 6" in den von den fluchtenden umfangsseitigen Ausnehmungen 24 überfahrenen Bereichen an der Innenwandung 2 haften, die sich nachfolgend zu einer zusammenhängenden Gleitmittelverteilung 6 vereinigen, die die Innenwandung 2 rundum unter Verankerung in den zwischen den Querrippen 23 gebildeten Rillen benetzt. Der im Überschuß vorhandene, mit dem Innendurchmesser des Rohrs 1' querschnittsgleiche Gleit- mittelpfropfen 6' wird, wie im Falle des Ausführungsbeispiels nach Fig. 5, mit dem Treiborgan 12' nach dessen Durchgang durch das Rohr endseitig ausgestoßen. Soweit nicht anders erwähnt, stimmt das Treiborgan 12' mit dem Treiborgan 12 überein, wie es auch durch die Verwendung gleicher Bezugszeichen für gleiche bzw. übereinstimmende Teile kenntlich gemacht ist.

Versuche haben gezeigt, daß bei einem erfindungsgemäßen Kunststoffrohr mit innenseitiger Profilierung und Gleitmittelbeschichtung die Reibkräfte beim Einziehen eines Kabels od. dgl. Einzugelements wesentlich herabgesetzt sind. In ein Kunststoffrohr in einer Ausgestaltung gemäß Fig. 1 bzw. 5 von 550 m Länge und mit einer Abwinkelung am Ende von etwa 90° wurde ein Kabel mit einem Gewicht von 340 kg eingezogen. Die hierfür erforderliche Zugkraft betrug nur 0,3 kN. Als Gleitmittel wurde ein Gemisch aus 50% Silikonöl und 50% Mikrokugeln verwendet. Bei einem Vergleichsversuch mit einem unter den gleichen Bedingungen verlegten Kunststoffrohr gleicher Länge ohne innenseitige Profilierung und Gleitmittelbeschichtung war für das Einziehen eines gleichen Kabels eine Zugkraft von 4,8 kN erforderlich. Dies verdeutlicht augenfällig die wesentliche Reibungsverminderung, die mittels des erfindungsgemäßen Kunststoffrohrs beim Einziehen von Kabeln u. dgl. Einzugselementen erzielbar ist.

## Patentansprüche

1. Kunststoffrohr zur Aufnahme von Einzügen, insbesondere Kabelschutzrohr, mit einer in allseitiger Verteilung von einem Gleitmittel benetzten Innenwandung, dadurch gekennzeichnet, daß die Innenwandung (2) mit einer das fertigungsseitig eingebrachte Gleitmittel (6) haftend aufnehmenden Profilierung (3,7,9,11) ausgestattet ist.

2. Kunststoffrohr nach Anspruch 1, dadurch gekennzeichnet, daß die Profilierung (3,7,9,11) eine Profiltiefe von weniger als 1 mm aufweist.

3. Kunststoffrohr nach Anspruch 1 oder 2, dadurch gekennzeichnet, daß die Profilierung (3,7,9,11) rippenförmig ausgebildet ist.

4. Kunststoffrohr nach Anspruch 3, dadurch gekennzeichnet, daß die Profilierung (3) aus vorwiegend in Längsrichtung des Rohrs (1) verlaufenden Rippen (4) besteht.

5. Kunststoffrohr nach Anspruch 3, dadurch gekennzeichnet, daß die Profilierung (7,9,11) aus vorwiegend in Umfangsrichtung verlaufenden Rippen besteht.

6. Kunststoffrohr nach Anspruch 1 oder 2, dadurch gekennzeichnet, daß die Profilierung in voneinander getrennten Eintiefungen in der Rohrinnenwandung besteht.

7. Kunststoffrohr nach Anspruch 1 oder 2, dadurch gekennzeichnet, daß die Profilierung in voneinander getrennten Noppen auf der Rohrinnenwandung besteht.

8. Kunststoffrohr nach einem der Ansprüche 1 bis 7, dadurch gekennzeichnet, daß das Gleitmittel (6) aus einer Mischung von festen und flüssigen Bestandteilen besteht.

9. Kunststoffrohr nach Anspruch 8, dadurch gekennzeichnet, daß die festen Bestandteile Microkugeln sind.

10. Kunststoffrohr nach Anspruch 8, dadurch gekennzeichnet, daß die flüssigen Bestandteile im wesentlichen aus einem Öl oder Ölgemisch bestehen.

11. Kunststoffrohr nach einem der Ansprüche 1 bis 10, dadurch gekennzeichnet, daß das Gleitmittel haftende Bestandteile aufweist.

12. Kunststoffrohr nach einem der Ansprüche 8 bis 11, dadurch gekennzeichnet, daß die flüssigen Bestandteile weder wasseraufnehmend noch trocknend sind.

13. Kunststoffrohr nach Anspruch 9, dadurch gekennzeichnet, daß die Mikrokugeln eine nach innen aus der Profilierung vorstehende Größe aufweisen.

14. Verfahren zum Herstellen eines Kunststoffrohrs nach einem der Ansprüche 1 bis 13, dadurch gekennzeichnet, daß das Rohr, ausgehend von einer geeigneten Kunststoff zusammensetzung, nahtlos extrudiert sowie auf seiner Innenwandung mit einer Profilierung zur Aufnahme von Gleitmittel versehen, ein Gleitmittelvorrat im Überfluß in eines der beiden Enden des Rohres eingefüllt und der Gleitmittelvorrat als Pfropfen durch Druckluftbeaufschlagung über ein im wesentlichen durchmessergleiches Treiborgan durch das Rohr, dessen Innenwandung unter Abgabe von Gleitmittel fortschreitend rundum benetzend, hindurchgetrieben wird.

15. Vorrichtung zur Durchführung des Verfahrens nach Anspruch 14, gekennzeichnet durch einen Extruder zum Extrudieren des Kunststoffrohres (1,1',8,10), eine Profilierungseinrichtung zum Profilieren der Innenwandung (2) des Kunststoffrohrs und eine Einrichtung zum Auftragen von Gleitmittel (6) auf die Innenwandung des Kunststoffrohrs mit einem durch dieses hindurchbewegbaren Treiborgan (12,12'), das eine von Druckluft beaufschlagbare Kolbenfläche (13) und eine dieser gegenüberliegende Gleitmittel-Vortriebsfläche (14) umfaßt, wobei der Außendurchmesser der Kolbenfläche und der Vortriebsfläche dem Innendurchmesser des Rohrs für einen Gleiteingriff mit dessen Innenwandung (2) entspricht.

16. Vorrichtung nach Anspruch 15, dadurch gekennzeichnet, daß die Kolbenfläche (13) und die Vortriebsfläche (14) des Treiborgans (12;12') mit axialem Abstand voneinander angeordnet sind und zwischen diesen, wiederum unter Einhaltung eines jeweiligen axialen Abstands, eine durchmessergleiche Verteilscheibe (15) angeordnet ist.

17. Vorrichtung nach Anspruch 15 oder 16, dadurch gekennzeichnet, daß die Kolbenfläche (13) und die Vortriebsfläche (14) sowie ggf. die Verteilscheibe (15) in ihrem mit der Innenwandung (2) des Rohrs (1;1') in Eingriff bringbaren Umfangsbereich jeweils von einem verschleißfesten, elastischen Werkstoff gebildet sind.

18. Vorrichtung nach einem der Ansprüche 15 bis 17, dadurch gekennzeichnet, daß das Treiborgan (12;12') von einem zentralen Tragdorn (18) und auf diesem mit axialem Abstand voneinander festgelegten Ringscheiben (15,16,17; 15',16',17') gebildet ist, die als Kolben- und Vortriebsfläche bzw. Verteilscheibe dienen.

19. Vorrichtung nach Anspruch 18, dadurch gekennzeichnet, daß die Ringscheiben (15',16',17') an ihrem Außenumfang mit in Umfangsrichtung mit Abstand voneinander angeordneten Ausnehmungen (24) versehen sind und die Ausnehmungen der einzelnen Ringscheiben in axialer Richtung jeweils miteinander fluchten.

20. Vorrichtung nach einem der Ansprüche 15 bis 19, dadurch gekennzeichnet, daß das Treiborgan (12;12') eine symmetrische Ausbildung beidseits seiner mittleren Querebene aufweist.

## Claims

1. Plastic conduit for receiving inserts, in particular cable protection conduit, having an inside wall wetted in all-round distribution with a lubricant, characterized in that the inside wall (2) is finished with a profiling (3, 7, 9, 11) which adhesively receives the lubricant (6) introduced during manufacture.

2. Plastic conduit according to Claim 1, characterized in that the profiling (3, 7, 9, 11) has a profiling depth of less than 1 mm.

3. Plastic conduit according to Claim 1 or 2, characterized in that the pofiling (3, 7, 9, 11) is of rib-like construction.

4. Plastic conduit according to Claim 3, characterized in that the profiling (3) comprises ribs (4) predominantly extending in the longitudinal direction of the conduit (1).

5. Plastic conduit according to Claim 3, characterized in that the profiling (7, 9, 11) comprises ribs predominently extending in the circumferential direction.

6. Plastic conduit according to Claim 1 or 2, characterized in that the profiling comprises recesses, separated from each other, in the conduit inside wall.

7. Plastic conduit according to Claim 1 or 2, characterized in that the profiling is comprised of knobs, separated from each other, on the conduit inside wall.

8. Plastic conduit according to one of Claims 1 to 7, characterized in that the lubricant (6) is composed of a mixture of solid and liquid constituents.

9. Plastic conduit according to Claim 8, characterized in that the solid constituents are microspheres.

10. Plastic conduit according to Claim 8, characterized in that the liquid constituents are composed essentially of an oil or oil mixture.

11. Plastic conduit according to one of the Claims 1 to 10, characterized in that the lubricant contains adhesive constituents.

12. Plastic conduit according to one of Claims 8 to 11, characterized in that the liquid constituents are neither water-adsorbing nor drying.

13. Plastic conduit according to Claim 9, characterized in that the microspheres have a size projecting inwards out of the profiling.

14. Process for the production of a plastic conduit according to one of Claims 1 to 13, characterized in that, starting from a suitable plastic composition, the conduit is seamlessly extruded and is provided with a profiling on its inside wall for receiving lubricant, an excess stock of lubricant is poured into one of the two ends of the conduit and the stock of lubricant is driven as a plug by the application of compressed air via a drive element, essentially having the same diameter, through the conduit, whose inside wall is progressively wetted all round by the provision of lubricant.

15. Device for carrying out the process according to Claim 14, characterized by an extruder for extruding the plastic conduit (1, 1', 8, 10), a profiling device for profiling the inside wall (2) of the plastic conduit and a device for applying lubricant (6) to the inside wall of the plastic conduit with a drive element (12, 12') which can be moved through the latter and which comprises a piston surface (13), to which compressed air is applied, and a lubricant propulsion surface (14) situated opposite the latter, the outside diameter of the piston surface and the propulsion surface corresponding to the inside diameter of the conduit for a sliding engagement with the inside wall of the latter (2).

16. Device according to Claim 15, characterized in that the piston surface (13) and the propulsion surface (14) of the drive element (12; 12') are arranged at an axial distance from each other and between them there is arranged a distribution disc (15), having the same diameter, again while maintaining a particular axial distance.

17. Device according to Claim 15 or 16, characterized in that the circumferential region, to be brought into contact with the inside wall (2) of the conduit (1; 1') of the piston surface (13) and of the propulsion surface (14), and also, optionally, of the distribution disc (15) is in each case formed by a wear-resistant, elastic material.

18. Device according to one of the Claims 15 to 17, characterized in that the drive element (12; 12') is formed by a central supporting mandrel (18) and annular discs (15, 16, 17; 15', 16', 17') which are fixed on the latter at an axial distance from each other and which act as piston surface and propulsion surface or distribution disc.

19. Device according to Claim 18, characterized in that the annular discs (15', 16', 17') are provided at their outside circumference with cutouts (24) arranged at a distance from each other in the circumferential direction and the cutouts of the individual annular discs are in each case in line with each other in the axial direction.

20. Device according to one of the Claims 15 to 19, characterized in that the drive element (12; 12') has a symmetrical construction on either side of its central transverse plane.

**Revendications**

1. Tuyau de matière plastique pour recevoir des insertions, en particulier tuyau de protection de câbles avec, dans une répartition de tous les côtés, une paroi intérieure couverte d'un agent de glissement, caractérisé en ce que la paroi intérieure (2) est équipée d'un profilage (3, 7, 9, 11) recevant de manière adhérente l'agent de glissement (6) introduit au moment de la fabrication.

2. Tuyau de maière plastique suivant la revendication 1, caractérisé en ce que le profilage (3, 7, 9, 11) présente une profondeur de profil inférieure à 1 mm.

3. Tuyau de matière plastique suivant la revendication 1 ou 2, caractérisé en ce que le profilage (3, 7, 9, 11) est réalisé sous forme de nervures.

4. Tuyau de matière plastique suivant la revendication 3, caractérisé en ce que le profilage (3) est constitué de nervures (4) s'étendant de manière prépondérante dans la direction longitudinale du tuyau (1).

5. Tuyau de matière plastique suivant la revendication 3, caractérisé en ce que le profilage (7, 9, 11) est constitué de manière prépondérante de nervures s'étendant en direction périphérique.

6. Tuyau de matière plastique suivant la revendication 1 ou 2, caractérisé en ce que le profilage consiste en renfoncements, séparés les uns des autres, dans la paroi intérieure du tuyau.

7. Tuyau de matière plastique suivant la revendication 1 ou 2, caractérisé en ce que le profilage consiste en saillies séparées les unes des autres sur la paroi intérieure du tuyau.

8. Tuyau de matière plastique suivant l'une des revendications 1 à 7, caractérisé en ce que l'agent de glissement (6) consiste en un mélange de constituants solides et liquides.

9. Tuyau de matière plastique suivant la revendication 8, caractérisé en ce que les constituants solides sont des microbilles.

10. Tuyau de matière plastique suivant la revendication 8, caractérisé en ce que les constituants liquides consistent en principe en huile ou en mélange d'huiles.

11. Tuyau de matière plastique suivant l'une des revendicaiions 1 à 10, caractérisé en ce que l'agent de glissement présente des parties constitutives adhérentes.

12. Tuyau de matière plastique suivant l'une des revendications 8 à 11, caractérisé en ce que les constituants liquides ne sont ni capables de retenir de l'eau, ni desséchants.

13. Tuyau de matière plastique suivant la revendication 9, caractérisé en ce que les microbilles présentent une grandeur saillante vers l'intérieur à partir du profilage.

14. Procédé pour la fabrication d'un tuyau de matière plastique suivant l'une des revendications 1 à 13, caractérisé en ce que le tuyau, en partant d'une composition appropriée de matière plastique, est extrudé sans couture et pourvu, sur sa paroi intérieure, d'un profilage pour recevoir un agent de glissement, une réserve d'agent de glissement en surabondance garnissant une des deux extrémités du tuyau, et en ce que la provision d'agent de glissement est poussée à travers le tuyau, sous forme de bouchons, par une sollicitation par de l'air comprimé, par l'intermédiaire d'un organe de poussée en principe de même diamètre, mouillant progressivement, sur tout son pourtour, sa paroi intérieure en cédant de l'agent de glissement.

15. Dispositif pour la mise en œuvre du procédé suivant la revendication 14, caractérisé par un extrudeur pour extruder le tuyau de matière plastique (1, 1', 8, 10), par un dispositif de profilage pour profiler la paroi intérieure (2) du tuyau de matière plastique et par un dispositif pour l'apport d'agent de glissement (6) sur la paroi intérieure du tuyau de matière plastique, avec un organe de poussée (12, 12') pouvant être déplacé à travers le tuyau, cet organe comprenant une surface de piston (13) pouvant être sollicitée par de l'air comprimé, et une surface de propulsion (14) d'agent de glissement, se trouvant à l'opposé, le diamètre extérieur de la surface de piston et de la surface de propulsion correspondant au diamètre intérieur du tuyau pour une coopération à glissement avec sa paroi intérieure (2).

16. Dispositif suivant la revendication 15, caractérisé en ce que la surface de piston (13) et la surface de propulsion (14) de l'organe de poussée (12, 12') sont disposées à distance axiale l'une de l'autre, et en ce qu'entre celles-ci, à nouveau en respectant chaque fois une distance axiale, est disposé un disque de répartition (15) de même diamètre.

17. Dispositif suivant la revendication 15 ou la revendication 16, caractérisé en ce que la surface de piston (13) et la surface de propulsion (14) ainsi que, éventuellement, le disque de répartition (15) sont formés chaque fois par une matière élastique résistant à l'usure, dans leur région périphérique qui peut être mise en coopération avec la paroi intérieure (2) du tuyau (1, 1').

18. Dispositif suivant l'une des revendications 15 à 17, caractérisé en ce que l'organe de poussée (12, 12') est formé par un mandrin porteur central (18) et par des disques annulaires (15, 16, 17; 15', 16', 17') fixés sur celui-ci, à distance axiale l'un de l'autre, qui servent de surface de piston et de surface de propulsion, respectivement de disques de répartition.

19. Dispositif suivant la revendication 18, caractérisé en ce que les disques annulaires (15', 16', 17') sont pourvus, à leur pourtour extérieur, d'évidements (24) disposés à distance dans le sens de leur périphérie, et en ce que les évidements des divers disques annulaires s'alignent chaque fois les uns sur les autres en direction axiale.

20. Dispositif suivant l'une des revendications 15 à 19, caractérisé en ce que l'organe de poussée (12, 12') présente une configuration symétrique des deux côtés de son plan transversal médian.

EP 0 221 481 B1

FIG.1

FIG.2

FIG.3

FIG.4

FIG.5

FIG.6